# EUROPÄISCHE PATENTANMELDUNG

(11) **EP 3 916 162 A1**
(43) Veröffentlichungstag der Anmeldung: **01.12.2021**
(21) Anmeldenummer: 21173062.7
(22) Anmeldetag: 10.05.2021
(51) Int. Cl.: E03B 3/02, E03F 1/00

(54) **SPEICHER- UND VERSICKERUNGSANLAGE**

(30) Priorität: 27.05.2020 DE 102020114246
(71) Anmelder: Enregis GmbH, 59846 Sundern (DE)
(72) Erfinder: Amft, Andreas Paul, 59755 Arnsberg (DE)
(74) Vertreter: Michalski Hüttermann & Partner Patentanwälte mbB

(57) **Zusammenfassung**

Die Erfindung betrifft die Anordnung einer Speicher- und Versickerungsanlage (1) für ein Fluid (2) im Erdreich, umfassend einen Speicherkörper (3) und einen mit dem Speicherkörper (3) verbundenen Versickerungsbereich (4), wobei der Speicherkörper (3) dazu ausgestaltet ist, das Fluid (2) zur Zwischenspeicherung in sich aufzunehmen und zur Versickerung an den Versickerungsbereich (4) abzugeben, der Versickerungsbereich (4) dazu ausgestaltet ist, das Fluid (2) zur Versickerung an das die Speicher- und Versickerungsanlage (1) umgebende Erdreich (5) abzugeben, und die Speicher- und Versickerungsanlage (1) ein Ventil (6) aufweist, mit dem der Fluss des Fluids (2) von dem Speicherkörper (3) in den Versickerungsbereich (4) steuerbar ist.

## Beschreibung

Die Erfindung betrifft eine Speicher- und Versickerungsanlage für ein Fluid, umfassend einen Speicherkörper und einen Versickerungsbereich, wobei der Speicherkörper dazu ausgestaltet ist, das Fluid zur Zwischenspeicherung in sich aufzunehmen und zur Versickerung an den Versickerungsbereich abzugeben und der Versickerungsbereich dazu ausgestaltet ist, das Fluid zur Versickerung an das die Speicher- und Versickerungsanlage umgebende Erdreich abzugeben.

Zur Zwischenspeicherung und Versickerung von Fluiden, vor Allem von Niederschlagswasser, werden in der Praxis häufig Rigolen eingesetzt, die Verteilrohre enthalten und entweder mit Kies oder mit Versickerungsvorrichtungen (Hohlkörpern) gefüllt sind. Moderne Speicher- und Versickerungssysteme enthalten oft modular aufgebaute Hohlkörper, die zusammen den statischen Rückhalt des Behälters bilden und je nach Anwendung mit einer offenporigen Membran beispielsweise mit einem Vliesstoff (Versickerungsanlage) oder mit Folien (Speichersystem) ummantelt sind.

Zur Speicherung von Niederschlagswasser, das als Brauchwasser verwendet werden soll, werden in der Regel Auffangbehälter, z.B. sogenannte Regentonnen, verwendet. Diese können überirdisch oder unterirdisch verbaut werden. In diesen Auffangbehältern kann das aufgenommene Niederschlagswasser gespeichert und über eine Pumpe einem Verbraucher bei Bedarf zugeführt werden.

Solche Systeme haben den Nachteil, dass sie einen vorbestimmten Füllstand haben. Ist der Speicherkörper vollständig mit Niederschlagswasser gefüllt, kann nachkommendes Niederschlagswasser bei anhaltendem oder neu eintretendem Niederschlagsereignis nicht mehr aufgenommen werden, sodass es unkontrolliert direkt versickert, ohne einer vorangeschalteten Nutzung zugeführt zu werden. Folglich kann kein Austausch des gespeicherten Niederschlagswasser erfolgen, sodass das ältere stehende Niederschlagswasser bis zum Verbrauch gespeichert wird und das nachkommende frische Niederschlagswasser nicht aufgefangen werden kann. Stehendes Wasser bietet einen idealen Nährboden für Bakterien und verkeimt daher schneller. Die Verkeimung kann dann auch auf die Speicher- und Versickerungsanlage übergreifen, was Schäden an der Speicher- und Versickerungsanlage zur Folge haben kann. In Anbetracht des stetig an Wichtigkeit zunehmenden Klimaschutzes stellt das direkte Versickern von Regenwasser ohne eine vorangeschaltete Nutzung als Brauchwasser zudem eine Vergeudung an brauchbarem Wasser dar, die es zu vermeiden gilt.

Die DE 196 38 246 A1 beschreibt eine Einrichtung zum Speichern und Versickern von Regenwasser. Der Speicherraum ist von einem Sickerschacht durch eine Trennwand getrennt. Über einen Zulauf wird das Regenwasser einer Filtereinrichtung zugeführt. Das gefilterte Regenwasser gelangt danach in den Speicherraum. Bei einem vorbestimmten Füllstand gelangt das Regenwasser über einen Überlauf in den Sickerschacht, der zur Außenseite hin gelocht ist, sodass das Regenwasser in das Erdreich versickern kann. Nicht versickerndes Wasser kann über einen Ablauf in die Kanalisation abgeleitet werden. Zusätzlich ist eine leitungsförmige Einrichtung vorgesehen, über die das Regenwasser zur Nutzung als Brauchwasser an die Oberfläche transportiert werden kann.

Davon ausgehend ist es die Aufgabe der Erfindung, eine universell einsetzbare Speicher- und Versickerungsanlage bereitzustellen, mit der die oben genannten Probleme vermieden werden.

Diese Aufgabe wird durch den Gegenstand des Patentanspruchs 1 gelöst. Bevorzugte Weiterbildungen finden sich in den Unteransprüchen.

Erfindungsgemäß wird damit eine Anordnung einer Speicher- und Versickerungsanlage für ein Fluid im Erdreich bereitgestellt, umfassend einen Speicherkörper und einen mit dem Speicherkörper verbundenen Versickerungsbereich, wobei der Speicherkörper fluiddicht ausgestaltet ist, um das Fluid zur Zwischenspeicherung in sich aufzunehmen, und einen Auslass zum Versickerungsbereich hin aufweist, um das Fluid an den Versickerungsbereich abzugeben, der Versickerungsbereich dazu ausgestaltet ist, das von dem Speicherkörper über den Auslass erhaltene Fluid zur Versickerung an das die Speicher- und Versickerungsanlage umgebende Erdreich abzugeben, und der Versickerungsbereich den Speicherkörper wenigstens abschnittsweise mantelförmig umschließt, dadurch gekennzeichnet, dass die Speicher- und Versickerungsanlage ein Ventil aufweist, mit dem der Fluss des Fluids von dem Speicherkörper durch den Auslass in den Versickerungsbereich steuerbar ist.

Es ist somit ein maßgeblicher Punkt der Erfindung, dass die Speicher- und Versickerungsanlage ein in der Erde befindliches Kombisystem aus Speicher und Versickerungsanlage darstellt. Auf Grund der Verbindung zwischen Speicherkörper und Versickerungsbereich wird eine Speicher- und Versickerungsanlage bereitgestellt, die mindestens zwei Funktionen in einem Bauwerk vereint, nämlich einerseits die Speicherung und andererseits die Versickerung eines Fluids, beispielsweise von Regenwasser. Dadurch wird das Gesamtvolumen des Bauwerks minimiert, sodass beim Einbau in das Erdreich Kosten gespart werden können.

Gemäß einer bevorzugten Weiterbildung der Erfindung weist der Speicherkörper einen Überlauf zum Versickerungsbereich, der es ermöglicht, dass das Fluid automatisch vom Speicherkörper in den Versickerungsbereich gelangt, wenn das Fluid im Speicherkörper eine gewisse Höhe erreicht hat. Insbesondere ist insofern im Speicherkörper vorzugsweise ein oberer Überlauf vorgesehen, der im oberen Bereich des Speicherkörpers angeordnet ist und damit dafür sorgt, dass das Speichervolumen des Speicherkörpers praktisch vollkommen ausgenutzt wird, es aber z.B. bei Starkregenfällen ab einer durch den Ort der Anordnung des Überlaufs zu einem Überlaufen des Fluids in den Versickerungsbereich kommt. Vorzugsweise ist insofern der Überlauf vorgesehen, der oberhalb von 75 % der Gesamthöhe des Speicherkörpers angeordnet ist.

Gemäß einer bevorzugten Weiterbildung der Erfindung ist der Auslass im unteren Bereich des Speicherkörpers angeordnet, vorzugsweise direkt über dem Boden des Speicherkörpers. Auf diese Weise kann der Speicherkörper praktisch vollkommen trockenfallen und damit zur Aufnahme neuen Fluids sein maximales Volumen bereitstellen.

Der Versickerungsbereich kann auf unterschiedliche Weise mit dem Speicherkörper verbunden sein. Gemäß einer bevorzugten Ausgestaltung der Erfindung liegt der Versickerungsbereich flächig an dem Speicherkörper an. Ganz besonders bevorzugt ist der Versickerungsbereich dabei kraft- und/oder formschlüssig mit dem Speicherkörper verbunden. Gemäß einer alternativen bevorzugten Ausgestaltung der Erfindung ist der Versickerungsbereich im Abstand von dem Speicherkörper angeordnet und über ein Zwischenelement mit diesem verbunden.

Über das Ventil ist das Abfließen des Fluids, beispielsweise des Regenwassers, in einen Versickerungsbereich steuerbar. Bei Bedarf, beispielsweise bei eintretendem oder prognostiziertem Regenereignis, kann das Ventil geöffnet werden, sodass das gespeicherte Regenwasser dem Versickerungsbereich zugeführt wird und versickert. Dadurch entsteht neues Speichervolumen für nachkommendes Regenwasser.

Gemäß einer bevorzugten Weiterbildung der Erfindung sind der Speicherkörper und der Versickerungsbereich über ein hydrostatisches Gefälle miteinander gekoppelt. Dadurch wird das Abfließen des Regenwassers von dem Speicherkörper in den Versickerungsbereich ohne externe Krafteinwirkung gewährleistet.

Ist vorliegend die Rede von einem Speicherkörper, so ist damit die Anordnung aus mindestens einem Hohlkörper gemeint, wobei der Hohlkörper aus Kunststoff, Stahl oder Beton besteht und, wenn mehrere Hohlkörper vorgesehen sind, diese miteinander verbunden sind.

Ist vorliegend die Rede von einem Versickerungsbereich, so ist damit ein Bereich zwischen dem Speicherkörper und dem anstehenden Erdreich gemeint, der zur Versickerung ausgestaltet ist. Dieser kann sich entweder über den gesamten Mantel des Speicherkörpers, sowohl parallel zum Erdboden als auch senkrecht zum Erdboden oder in einem Bereich dazwischen erstrecken oder lediglich parallel zum Erdboden angeordnet sein und optionale Verlängerungen aufweisen, die von dem Speicherkörper wegführen.

Weiterhin ist vorgesehen, dass das Ventil derart ansteuerbar ist, dass die Versickerungsfunktion des Versickerungsbereiches ein- und ausschaltbar ist. Der Speicherkörper ist mit dem Versickerungsbereich über ein Ventil gekoppelt. Die Versickerungsfunktion des Versickerungsbereiches wird dann aktiviert, wenn das Regenwasser von dem Speicherkörper in den Versickerungsbereich fließen kann, sodass der Versickerungsbereich mit Regenwasser gefüllt wird. Ist das Ventil also geöffnet, kann das Regenwasser von dem Speicherkörper in den Versickerungsbereich abfließen, sodass es ausgehend von dem Versickerungsbereich in das Erdreich versickern kann. Ist das Ventil jedoch geschlossen, kann das Regenwasser nicht in den Versickerungsbereich abließen, sodass sich die Funktion der Speicher- und Versickerungsanlage bei geschlossenem Ventil auf die Speicherfunktion beschränkt.

Das Ventil ist dabei vorzugsweise elektronisch oder elektro-mechanisch steuerbar. Über eine externe Steuereinheit kann das Ventil entweder manuell oder vollautomatisch mechanisch oder elektro-mechanisch geöffnet bzw. geschlossen werden.

Eine wesentlich bevorzugte Weiterbildung der Erfindung liegt darin, dass die Speicher- und Versickerungsanlage eine Verarbeitungseinrichtung aufweist, wobei die Verarbeitungseinrichtung einen Regensensor umfasst, mit dem Echtzeit-Wetterdaten generiert werden können. Alternativ oder zusätzlich dazu kann auch mit vorhergesagte Wetterdaten gearbeitet werden. Vorzugsweise ist die Verarbeitungseinrichtung derart ausgestaltet, dass sie Echtzeit-Wetterdaten und/oder vorhergesagte Wetterdaten auswerten kann und die Verarbeitungseinrichtung mit dem Ventil gekoppelt ist, sodass das Ventil in Abhängigkeit der Wetterdaten ansteuerbar ist. Dadurch kann das Versickern des gespeicherten Regenwassers Bedarf optimiert erfolgen. Das Regenwasser kann demnach in dem Speicherkörper gespeichert werden bis der Speicherkörper vollständig gefüllt ist und kein Regenwasser nachkommt. Prognostiziert die Wettervorhersage jedoch ein Regenereignis, das von der Verarbeitungseinheit empfangen werden kann, kann das Ventil vollautomatisch geöffnet werden, sodass das gespeicherte Regenwasser zur Versickerung an den Versickerungsbereich abgegeben wird und so Speichervolumen für nachkommendes Regenwasser des vorhergesagten Regenereignis geschaffen wird. Ein unvorhergesehenes Regenereignis kann in Echtzeit von einem Regensensor detektiert und die Information an die Verarbeitungseinheit weitergeleitet werden, sodass auch in diesem Fall das Ventil vollautomatisch geöffnet werden kann, um neues Speichervolumen zu schaffen. Folglich ist es mit der Verarbeitungseinheit möglich, das Ventil in Abhängigkeit der aktuellen Wetterdaten bzw. der Wettervorhersage vollautomatisch zu steuern, sodass in jedem Fall ausreichend Speichervolumen für neues Regenwasser zur Verfügung steht.

Gemäß einer bevorzugten Weiterbildung der Erfindung weist die Speicher- und Versickerungsanlage einen Zulauf auf, über den das Fluid dem Speicherkörper zuführbar wird, wobei der Zulauf ein hydrostatisches Gefälle aufweist. Der Zulauf kann an unterschiedlichen Stellen an dem Speicherkörper angebracht sein. Dabei ist sowohl eine seitliche Positionierung an den Seitenwänden des Speicherkörpers als auch eine Positionierung an der Ober- oder Unterseite des Speicherkörpers möglich. Aufgrund des hydrostatischen Gefälles kann das Regenwasser dem Speicherkörper ohne externe Krafteinwirkung zugeführt werden.

Darüber hinaus kann der Speicherkörper einen Ablauf aufweisen, über den das Fluid dem Versickerungsbereich zuführbar ist. Erfindungsgemäß wird der Ablauf durch ein Ventil gewährleistet, das das Abfließen des Fluids in den Versickerungsbereich steuert.

Die Erfindung ermöglicht nicht nur ein Versickern des Regenwassers in das Erdreich, der Versickerungsbereich kann auch dazu ausgestaltet sein, das Fluid von dem Versickerungsbereich in ein Kanalnetz oder in einen Vorfluter abzugeben.

Grundsätzlich kann das gespeicherte Regenwasser auf unterschiedliche Art zur Benutzung an die Oberfläche transportiert werden. Gemäß einer bevorzugten Weiterbildung der Erfindung ist es jedoch vorgesehen, dass die Speicher- und Versickerungsanlage eine Pumpe oder Saugleitung aufweist, die dazu ausgestaltet ist, das in dem Speicherkörper gespeicherte Fluid aus dem Speicherkörper heraus zu einem Verbraucher hin zu befördern. Somit kann das gespeicherte Regenwasser als Brauchwasser mit Hilfe einer Pumpe oder Saugleitung an die Oberfläche transportiert und genutzt werden.

Weiterhin umfasst die Speicher- und Versickerungsanlage einen Schacht, der sich innerhalb oder außerhalb des Speicherkörpers befindet, wobei der Schacht für Probeentnahmen aus und/oder Kontrollarbeiten and der Speicher- und Versickerungsanlage ausgestaltet ist und/oder die Pumpe oder Saugleitung in dem Schacht angeordnet ist und/oder das Ventil in dem Schacht angeordnet ist. Der Schacht stellt eine Verbindung zwischen der unterirdisch verbauten Speicher- und Versickerungsanlage und der Erdoberfläche dar. Mit Hilfe des Schachtes können Kontroll-, Reinigungs- oder Wartungsarbeiten an der Speicher- und Versickerungsanlage durchgeführt werden. Dazu weist der Schacht eine Öffnung auf, durch die der Zugang ermöglicht wird. Darüber hinaus kann durch den Schacht die Entnahme von Wasserproben erfolgen. In dem Schacht können auch die Pumpe oder Saugleitung und das Ventil angeordnet sein. Der Schacht kann entweder von außen an den Speicherkörper gekoppelt oder in den Speicherkörper integriert sein.

Gemäß einer bevorzugten Weiterbildung der Erfindung weist die Speicher- und Versickerungsanlage eine fluidundurchlässige Ummantelung auf. Die Ummantelung besteht vorzugsweise aus PE-, HDPE- oder EPDM- Folien und/oder Membranen und/oder Kunststoffplatten und/oder einer Noppenfolie und/oder einer geprägten Folie und/oder einer perforierte Kunststoffbahn. Auf Grund der Ummantelung mit fluidundurchlässigem Material, wird der Speicherkörper zusätzlich abgedichtet, sodass kein Regenwasser aus dem Speicherkörper austreten kann.

Grundsätzlich ist es im Rahmen der Erfindung möglich, den Versickerungsbereich durch jede Form von fluiddurchlässigen Hohlräumen zu gewährleisten. Diese können beispielsweise durch geprägte Folien oder perforierte Kunststoffbahnen bereitgestellt werden. Gemäß einer bevorzugten Weiterbildung der Erfindung ist es jedoch vorgesehen, dass der Versickerungsbereich mindestens einen Hohlkörper aufweist, wobei der Hohlkörper aus Kunststoff besteht und/oder eine fluiddurchlässige Ummantelung aufweist. Die Ummantelung besteht dabei vorzugsweise aus fluiddurchlässigem Geotextil. Das Geotextil kann entweder aus natürlichen Fasern, wie beispielsweise Schilf, Jute und/oder Kokos, oder aus künstlichen Fasern, wie beispielsweise Polypropylen, Polyamid, Polyester und/oder Polyethylen, bestehen. Alternativ kann der Hohlraum auch aus anderen Materialien, wie Glasschotter, Kies, jegliche offenporige Materialien, wie Dämmstoffe, oder Substrate, wie Lawa-, Pflanz- oder Reinigungssubstrate, aufgebaut werden. Eine Vliesummantelung ist je nach Wahl der Materialien im Rahmen der Erfindung besonders bevorzugt.

Gemäß einer bevorzugten Weiterbildung der Erfindung weist die Speicher- und Versickerungsanlage eine Reinigungsstufe auf, wobei die Reinigungsstufe in dem Speicherkörper angeordnet ist und die Reinigungsstufe dazu ausgestaltet ist, das Fluid von Feststoffen, Leichtflüssigkeiten und/oder gelösten Stoffen zu reinigen.

Insbesondere der Straßenverkehr sorgt mit seinem Eintrag aus z.B. dem Abrieb von Reifen oder Bremsanlagen sowie Leichtflüssigkeiten, wie Mineralölkohlenwasserstoffen (MKW) und polycyclischen aromatischen Kohlenwasserstoffen (PAK), für einen Großteil der im Niederschlagswasser enthaltenen Fremdstoffe. Darüber hinaus werden eine Vielzahl unterschiedlicher Stoffe aus Industrie und Landwirtschaft mit dem Niederschlagswasser in die Speicher- und Versickerungsanlage eingetragen. Die Reinigungsstufe ist dazu ausgestaltet, das Fluid von diesen Fremdstoffen zu reinigen. Dabei ist die Reinigungsstufe in dem Speicherkörper integriert, sodass das Regenwasser bei Eintritt in den Speicherkörper gereinigt wird. Die Integration der Reinigungsstufe in den Speicherkörper ermöglicht eine kompakte Bauweise der Speicher- und Versickerungsanlage. Aufgrund der Reinigungsstufe kann zudem gewährleistet werden, dass das gespeicherte Regenwasser, das zur Versickerung in das Erdreich freigegeben wird, von Fremdstoffen, Leichtflüssigkeiten und/oder gelösten Stoffen gereinigt ist und somit nicht zur Verschmutzung des Erdreichs beiträgt.

Weiterhin ist vorgesehen, dass im Zulauf und/oder in der Reinigungsstufe strömungshemmende Strukturen vorgesehen sind. Der Zulauf und/oder die Reinigungsstufe sind also mit mechanischen oder baulichen Elementen ausgestattet, die die Strömung des Fluids mindern. So wird sichergestellt, dass die Strömung gering genug ist, so dass sich in der Reinigungsstufe befindende Fremdstoffe, insbesondere sich schon abgesetzte Feststoffe nicht remobilisieren. Die strömungshemmenden Strukturen können zum Beispiel Strömungstrenner, Prallwände, Tauch- oder Schlammwände sein. Diese Einbauten dienen der hydraulischen und qualitativen Optimierung des Zulaufs und/oder der Reinigungsstufe.

Nachfolgend wir die Erfindung anhand eines bevorzugten Ausführungsbeispiels unter Bezugnahme auf die Zeichnungen weiter im Detail erläutert.

In den Zeichnungen zeigen
- Fig. 1a: schematisch eine Speicher- und Versickerungsanlage gemäß einem ersten bevorzugten Ausführungsbeispiel der Erfindung mit geschlossenem Ventil,
- Fig. 1b: schematisch eine Speicher- und Versickerungsanlage gemäß dem ersten bevorzugten Ausführungsbeispiel der Erfindung aus Fig. 1a mit geöffnetem Ventil,
- Fig. 2: schematisch eine Speicher- und Versickerungsanlage gemäß einem zweiten bevorzugten Ausführungsbeispiel der Erfindung,
- Fig. 3: schematisch eine Speicher- und Versickerungsanlage gemäß einem dritten bevorzugten Ausführungsbeispiel der Erfindung,
- Fig. 4: schematisch eine Speicher- und Versickerungsanlage gemäß einem vierten bevorzugten Ausführungsbeispiel der Erfindung.

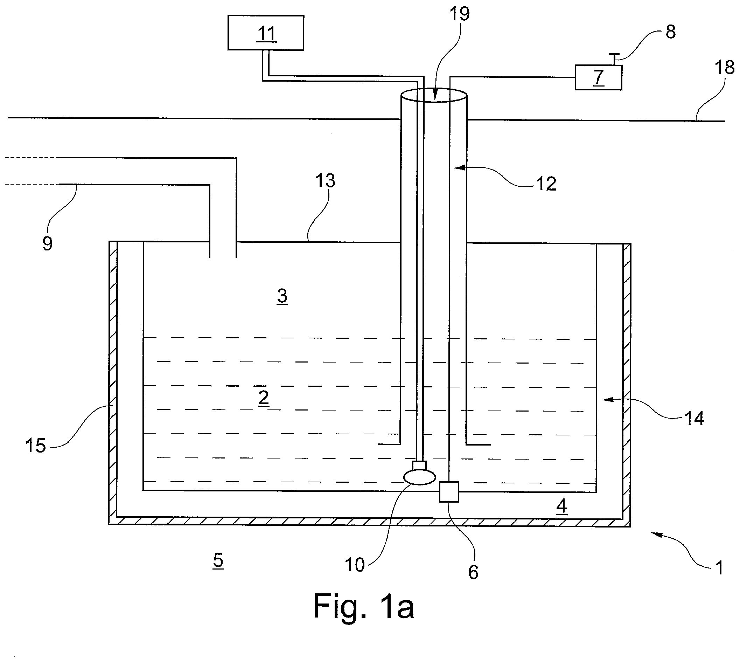

Speicher- und Versickerungsanlagen zur Speicherung und Rückgewinnung von Regenwasser werden in der Regel unterirdisch angelegt. Fig. 1a zeigt schematisch eine Speicher- und Versickerungsanlage 1 gemäß einem ersten bevorzugten Ausführungsbeispiel der Erfindung, die unter dem Erdboden 18 im Erdreich 5 angeordnet ist. Der Versickerungsbereich 4 liegt an dem Speicherkörper 3 flächig an. Somit wird eine Speicher- und Versickerungsanlage 1 bereitgestellt, die zwei Funktionen vereint und deren Volumen minimiert wird. Das Fluid 2, kann über den Zulauf 9 dem Speicherkörper 3 zugeführt werden. Fig. 1a zeigt die Speicher- und Versickerungsanlage 1 bei geschlossenem Ventil 6. Die Versickerungsfunktion ist demnach nicht aktiv, weil das Fluid 2 dem Versickerungsbereich 4 nicht zugeführt werden kann. Das Fluid 2 wird in dem Speicherkörper 3 gespeichert. Das Regenereignis ist beendet, sodass kein neues Fluid 2 zugeführt wird. Zur Nutzung des Fluids 2 als beispielsweise Brauchwasser kann es über eine Pumpe 10 an die Oberfläche zu einem Verbraucher 11 transportiert werden. Die Pumpe 10 sowie das Ventil 6 sind in dem Schacht 12 angeordnet. Das Ventil 6 ist mit einer Verarbeitungseinheit 7 verbunden. Die Verarbeitungseinheit 7 verarbeitet mit dem Regensensor 8 gemessene Echtzeit-Wetterdaten oder Wetterprognosen. Setzt ein Regenereignis ein oder wird ein Regenereignis prognostiziert, kann das Ventil 6 vollautomatisch geöffnet werden.

Fig., 1b zeigt die Speicher- und Versickerungsanlage 1 während eines Regenereignis bei geöffnetem Ventil 6. Das Ventil 6 wurde auf Grund der Wetterdaten geöffnet, sodass das Fluid 2 von dem Speicherkörper 3 in den Hohlkörper 14 des Versickerungsbereiches 4 abfließen kann. Von dem Versickerungsbereich 4 versickert das Fluid 2 durch die fluiddurchlässige Ummantelung 15 in das anstehende Erdreich 5. Auf Grund des einsetzenden Regenereignis wird nachkommendes Fluid 2 über einen Zulauf 9 dem Speicherkörper 3 zugeführt. Wird das Ventil 6 nach ausreichender Versickerung erneut geschlossen, kann das zuletzt zugeführte Fluid 2 in dem Speicherkörper gespeichert werden. Die fluidundurchlässige Ummantelung 13 des Speicherkörpers 3 verhindert eine unerwünschte Versickerung bei geschlossenem Ventil 6.

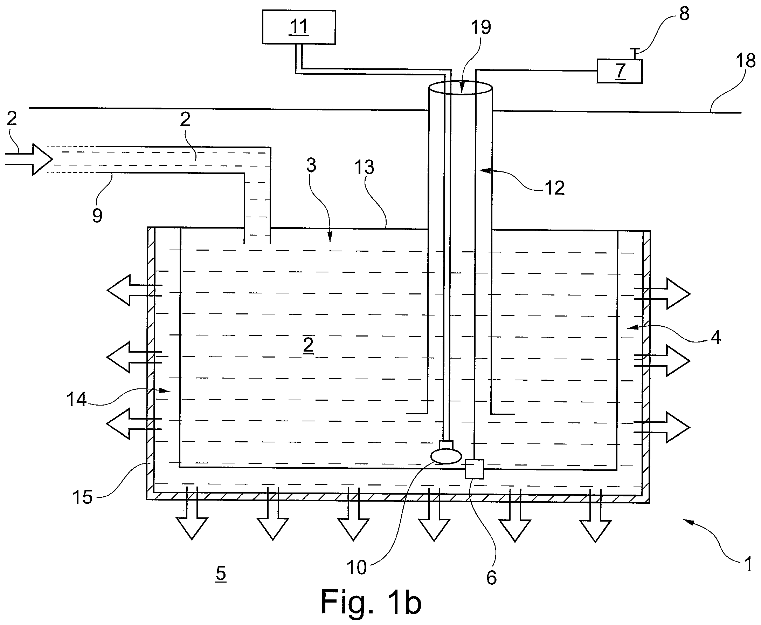

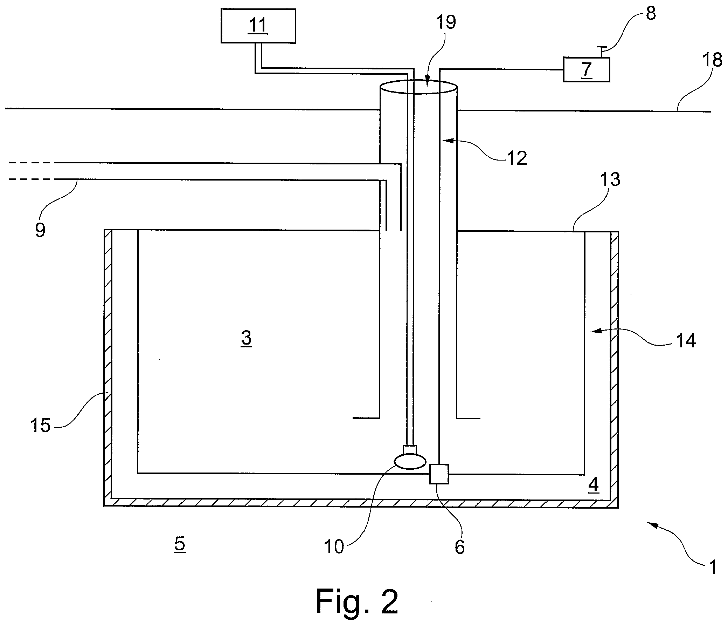

Wie bereits erwähnt, kann der Zulauf 9 unterschiedliche positioniert sein. Während der Zulauf in Fig. 1a und Fig. 1b direkt mit dem Speicherkörper 3 verbunden ist, zeigt Fig. 2 eine alternative Positionierung. Der Zulauf 9 ist mit dem Schacht 12 verbunden, sodass nachkommendes Fluid 2 über den Schacht 12 dem Speicherkörper zugeführt werden kann. Der Schacht 12 dient folglich nicht nur als Zugang für Kontroll-, Reinigungs- und Wartungsarbeiten, sondern beinhaltet auch die Pumpe 10, das Ventil 6 sowie den Zulauf 9. Wenngleich die Pumpe 10 und das Ventil 6 mit dem Verbraucher 11 und der Verarbeitungseinheit 7 verbunden sind und der Schacht 12 dazu eine Öffnung 19 aufweist, ist die Öffnung 19 selbstverständlich abgedichtet, sodass durch den Schacht 12 kein Fluid 2 dem Speicherkörper 3 zugeführt werden kann.

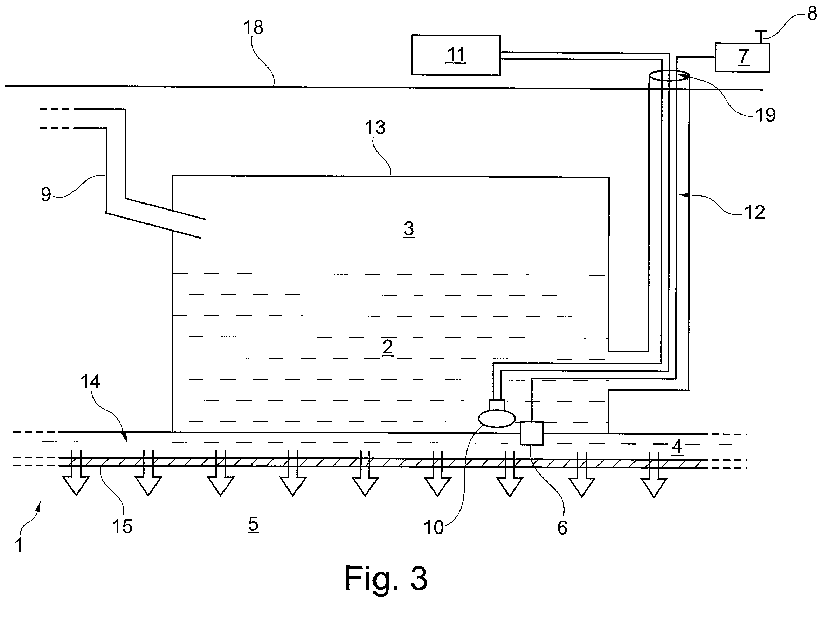

In Fig. 3 ist der Zulauf 9 seitlich positioniert und direkt mit dem Speicherkörper 3 verbunden. Das Fluid 2 wird demnach von der Seite direkt dem Speicherkörper 3 zugeführt. Der Speicherkörper 3 aus Fig. 3 ist in gefülltem Zustand dargestellt. Das Ventil 6 ist geöffnet, sodass das Fluid 2 dem Versickerungsbereich 4 zugeführt wird und versickert. Der Versickerungsbereich 4 erstreckt sich nicht um den gesamten Mantel des Speicherkörpers 3, sondern ist parallel zum Erdboden 18 angeordnet. Der Versickerungsbereich 4 weist zudem optionale Verlängerungen, die von dem Speicherkörper wegführen, auf. Dadurch kann ein Versickerungsbereich 4 gewährleistet werden, der ausschließlich waagerecht, also parallel zum Erdboden, verläuft und zusätzlich ausreichend groß ist, um eine schnelle Versickerung zu ermöglichen. Der Schacht 12 ist in diesem Ausführungsbeispiel seitlich an den Speicherkörper 3 angebracht. In dem Schacht 12 sind die Pumpe 10 und das Ventil 6 angeordnet.

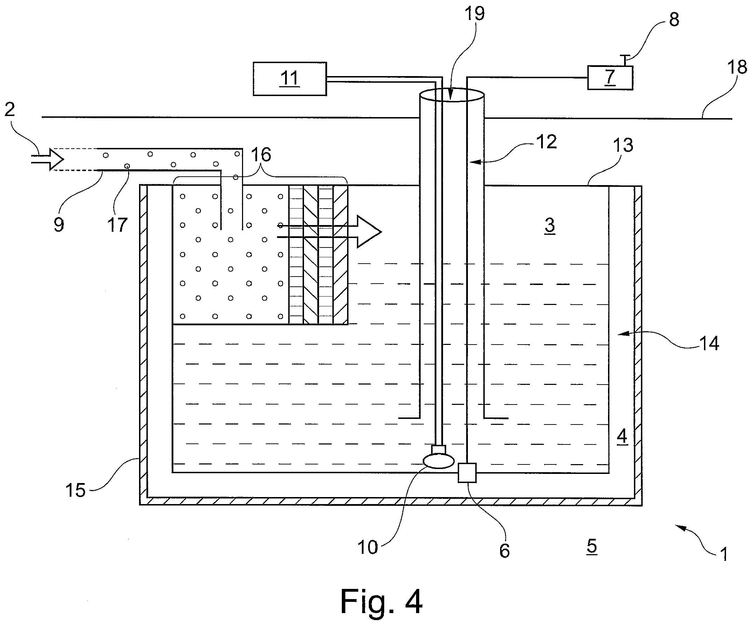

Wie bereits erwähnt, kann die Speicher- und Versickerungsanlage 1 eine zusätzliche Reinigungsstufe 16 aufweisen. Diese Anordnung ist in Fig. 4 dargestellt. Die Reinigungsstufe 16 ist in dem Speicherkörper 3 integriert. Das Ventil 6 ist geschlossen, sodass das Fluid 2 nicht versickern kann. Das verunreinigte Fluid 2 wird über den Zulauf 9 der in dem Speicherkörper 3 integrierten Reinigungsstufe 16 zugeführt. Aufgrund des hydrostatischen Gefälles wird das Fluid 2 durch die Reinigungsstufe 16 durchgeleitet. Die Reinigungsstufe 16 reinigt das Fluid 2 von Feststoffen 17, Leichtflüssigkeiten und/oder gelösten Stoffen. Das gereinigte Fluid 2 wird nach der Reinigung direkt dem Speicherkörper 3 zugeführt, sodass das gereinigte Fluid 2 bei Bedarf mit Hilfe der Pumpe 10 an die Oberfläche transportiert und von einem Verbraucher 11 benutzt werden kann. Bei geöffnetem Ventil 6, wird das gereinigte Fluid 2 dem Versickerungsbereich 4 zugeführt, sodass lediglich gereinigtes Fluid 2 in das Erdreich 5 versickert.

### Bezugszeichenliste

- 1: Speicher- und Versickerungsanlage
- 2: Fluid
- 3: Speicherkörper
- 4: Versickerungsbereich
- 5: Erdreich
- 6: Ventil
- 7: Verarbeitungseinrichtung
- 8: Regensensor
- 9: Zulauf
- 10: Pumpe
- 11: Verbraucher
- 12: Schacht
- 13: fluidundurchlässige Ummantelung
- 14: Hohlkörper
- 15: fluiddurchlässige Ummantelung
- 16: Reinigungsstufe
- 17: Feststoffe
- 18: Erdboden
- 19: Öffnung

## Patentansprüche

1. Anordnung einer Speicher- und Versickerungsanlage (1) für ein Fluid (2) im Erdreich, umfassend einen Speicherkörper (3) und einen mit dem Speicherkörper (3) verbundenen Versickerungsbereich (4), wobei
der Speicherkörper (3) fluiddicht ausgestaltet ist, um das Fluid (2) zur Zwischenspeicherung in sich aufzunehmen, und einen Auslass zum Versickerungsbereich (4) hin aufweist, um das Fluid (2) an den Versickerungsbereich (4) abzugeben,
der Versickerungsbereich (4) dazu ausgestaltet ist, das von dem Speicherkörper (3) über den Auslass erhaltene Fluid (2) zur Versickerung an das die Speicher- und Versickerungsanlage (1) umgebende Erdreich (5) abzugeben, und
der Versickerungsbereich (4) den Speicherkörper (3) wenigstens abschnittsweise mantelförmig umschließt, **dadurch gekennzeichnet, dass**
die Speicher- und Versickerungsanlage (1) ein Ventil (6) aufweist, mit dem der Fluss des Fluids (2) von dem Speicherkörper (3) durch den Auslass in den Versickerungsbereich (4) steuerbar ist.

2. Anordnung nach Anspruch 1, wobei der Auslass im unteren Bereich des Speicherkörpers (3) angeordnet ist.

3. Anordnung nach Anspruch 1 oder 2, wobei der Versickerungsbereich (4) seitlich von dem Speicherkörper (3) angeordnet ist.

4. Anordnung nach Anspruch 3, wobei der Versickerungsbereich (4) auch unterhalb des Speicherkörpers (3) angeordnet ist.

5. Anordnung nach einem der vorherigen Ansprüche, wobei der Versickerungsbereich (4) eine fluiddurchlässige Ummantelung (15) aufweist.

6. Anordnung nach Anspruch 5, wobei die fluiddurchlässige Ummantelung (15) von einer mantelförmig um den Speicherkörper (3) angeordneten Folie oder Kunststoffbahne gebildet ist.

7. Anordnung nach einem der vorherigen Ansprüche, wobei der Versickerungsbereich (4) wenigstens einen Hohlkörper aufweist, der vorzugsweise aus Kunststoff besteht.

8. Anordnung nach Anspruch 7, wobei der der Hohlkörper eine fluiddurchlässige Abschirmung aufweist, die derart ausgestaltet ist, dass sie den Eintrag von Material aus dem die Speicher- und Versickerungsanlage (1) umgebende Erdreich (5) in den Hohlkörper gering hält bzw. vermeidet.

9. Anordnung nach einem der vorherigen Ansprüche, wobei die Speicher- und Versickerungsanlage (1) eine Verarbeitungseinrichtung (7) aufweist, wobei
die Verarbeitungseinrichtung (7) einen Regensensor (8) umfasst, mit dem Echtzeit-Wetterdaten generiert werden können und
die Verarbeitungseinrichtung (7) derart ausgestaltet ist, dass sie Echtzeit-Wetterdaten und/oder vorhergesagte Wetterdaten auswerten kann und
die Verarbeitungseinrichtung (7) mit dem Ventil (6) gekoppelt ist, sodass das Ventil (6) in Abhängigkeit der Wetterdaten ansteuerbar ist.

10. Anordnung nach einem der vorherigen Ansprüche, wobei der Speicherkörper (3) einen Zulauf (9) aufweist, über den das Fluid (2) dem Speicherkörper (3) zuführbar ist, wobei der Zulauf (9) ein hydrostatisches Gefälle aufweist.

11. Anordnung nach einem der vorherigen Ansprüche, wobei die Speicher- und Versickerungsanlage (1) eine Pumpe (10) und/oder eine Saugleitung aufweist, die dazu ausgestaltet ist/sind, das in dem Speicherkörper (3) gespeicherte Fluid (2) aus dem Speicherkörper (3) heraus zu einem Verbraucher (11) hin zu befördern.

12. Anordnung nach einem der vorherigen Ansprüche, wobei die Speicher- und Versickerungsanlage (1) eine Reinigungsstufe (16) aufweist, wobei
die Reinigungsstufe (16) in dem Speicherkörper (3) angeordnet ist und
die Reinigungsstufe dazu ausgestaltet ist, das Fluid (2) von Feststoffen (17), Leichtflüssigkeiten und/oder gelösten Stoffen zu reinigen.
